# EUROPEAN PATENT SPECIFICATION

(11) **EP 4 214 452 B1**
(45) Date of publication and mention of the grant of the patent: **26.11.2025**
(21) Application number: 21787017.9
(22) Date of filing: 20.09.2021
(51) Int. Cl.: F24F 13/22, F24F 11/70

(54) **A CONDENSATE TRAY ASSEMBLY**
KONDENSATWANNE
ENSEMBLE PLATEAU DE CONDENSAT

(30) Priority: 21.09.2020 GB 202014857
(43) Date of publication of application: 26.07.2023
(73) Proprietor: Charles Austen Pumps Ltd., Byfleet West Byfleet Surrey KT14 7NY (GB)
(72) Inventor: COUGHLAN, Michael, West Byfleet Surrey KT14 7NY (GB); SHEPHERD, Bill, West Byfleet Surrey KT14 7NY (GB)
(74) Representative: Boult Wade Tennant LLP
(86) International application number: PCT/GB2021/052436
(87) International publication number: WO 2022/058753

(56) References cited:
- GB-A- 2 531 291
- GB-A- 2 565 112
- KR-A- 20190 009 480
- US-A1- 2009 064 698
- US-A1- 2016 047 563
- US-A1- 2016 047 564

## Description

The present invention relates to a condensate tray assembly for use below a condensate generating appliance. Such a condensate generating appliance may, for example, be a refrigeration unit, for example the type seen in supermarkets and the like or a boiler or air conditioning unit and the like.

In a refrigeration unit, typically a tray will be positioned below the appliance in order to catch any condensate generated by the appliance. The tray needs to be emptied regularly in order to prevent flooding. Typically this is done by having a high level sensor which will sense when the depth reaches a predetermined level. At this point, the pump will be driven in order to empty the tray until the level drops to a second level as determined by a low level sensor. This suffers from a problem that the low level sensor cannot reliably detect the level of the liquid very close to the bottom of the tray because of the effect of surface tension and contamination on the sensor. Further, the fact that the tray has a wide, shallow configuration means that a reasonable amount of liquid remains in the tray once the low level has been reached. This could be addressed by continuing to run the pump for a short period after the low level sensor is reached. However, it is difficult to estimate reliably how much time would be required as the rate of pumping of the pump will not be constant over time, for example if the pipe has begun to clog. Further, continuing to run the pump after the tray is empty, would generate an unpleasant noise.

In any event, the pumps are not self-priming pumps such that an amount of liquid needs to be retained in the pump once the pumping operation has finished.

As a result of this, in practice, a significant amount of liquid is left behind within the tray and the pump at the end of the pumping operation. This presents a hygiene hazard as microbial growth will occur in time within the tray and the pump.

GB 2565112 discloses a condensate pump with a liquid level sensor which detects high and low levels and operates the pump accordingly.

According to the present invention there is provided a condensate tray assembly according to claim 1 and a method of emptying a condensate tray according to claim 14.

Because the sensor determines the rate of change of the depth of the liquid, it is possible to make a much more accurate determination of how much longer the pump needs to be run for in order to empty the tray. Thus, if the efficiency of the pump has decreased, the rate of change will decrease accordingly and this can be allowed for in the calculation.

This technique can be used with a conventional pump as it allows the conventional pump to be controlled more accurately to retain a pre-determined volume/level of residual liquid as desired. Preferably, the pump is a self-priming pump. In this case, there is no need to leave any water in the pump at the end of the pumping operation. On this basis, therefore, the tray can be pumped to a level which is as close as possible to being fully empty and the pump itself can be devoid of liquid such that, at the end of each pumping operation, the amount of liquid present in the tray and pump is significantly lower than in the prior art.

The rate sensor may be in the form of a plurality of resistive sensors arranged in a vertical line, each one providing a binary indication of the presence or absence of liquid. By measuring the time between when the level passes the sensors, a rate of change calculation can be carried out. However, preferably, the sensor is a capacitive sensor. This can be in the form of a pair of capacitive plates arranged vertically within the tray, such that the sensor determines the capacitance of the surrounding medium, whether it be air or liquid to provide a continuously varying indication of the liquid depth.

The tray preferably has a sloped lower surface which slopes towards the outlet, a sensor being positioned in the vicinity of the outlet. As well as causing the liquid in the tray to flow towards the outlet, this ensures that the sensor is positioned in a region in which the depth of the liquid is effectively amplified by the nature of the slope as a nearly empty tray will still have a reasonable depth of liquid in the vicinity of the outlet as compared to a tray with a flat lower face.

A filter is preferably provided in the tray upstream of the outlet in order to prevent large particles within the tray from entering the pump. Preferably the sensor is integrated into the filter as this provides a convenient place to mount the sensor.

More preferably, the filter is formed of a printed circuit board comprising a plurality of holes forming a filter screen through the printed circuit board. Preferably, also, a first set of capacitive elements are formed in the printed circuit board forming a capacitive sensor capable of measuring the depth of the liquid adjacent to the filter. Such an arrangement provides an integral component which is able to both filter the liquid and provide means of determining the rate of change of the depth.

The capacitive sensor may be configured to measure the average depth of the liquid on both sides of the filter. In the event that the filter is blocked, the level might be high on one side of the filter and low on the other side of the filter and the sensor may be only be able to give a reading giving an intermediate value of depth. Therefore, preferably, the capacitive elements are shielded on one side such that they only measure the depth on one side of the filter. Thus, for example, the sensor can be configured to measure the liquid depth on the downstream side of the filter such that it can prevent the pump from being operated if the filter is clogged and the downstream side of the filter has been fully pumped out.

Preferably, the filter comprises a second set of capacitive elements formed on the printed circuit board forming a second capacitive sensor capable of measuring the depth of the liquid adjacent to the filter on a side opposite to the side measured by the first set of capacitive elements. This is preferably achieved by shielding the second set of capacitive elements, with a shield which is on the opposite side to the capacitive elements as compared to the shield for the first set of capacitive elements.

Thus, in a very simple manner which requires only that a number of additional tracks are printed onto the printed circuit board, a filter can be provided which sensing the rate of change of depth of the liquid on both sides of the filter.

Such an arrangement can now sense the rate of change of the liquid level on both sides of the filter element. This can provide additional diagnostic information to the controller as it is not only possible to determine the rate at which the tray is being emptied, but from a comparison of the rate of depth change on both sides of the filter it is also possible to determine information about the state of the filter which may have become blocked.

The printed circuit board preferably has an array of holes which decrease in size towards the bottom of the printed circuit board. This will filter out progressively smaller particles towards the bottom of the tray. The circuit board in the vicinity of the holes may be copper-plated. This provides the filter with anti-microbial properties and can be readily formed during the construction of the printed circuit board.

The invention also extends to a method of claim 13.

Where the filter comprises two sets of capacitive elements, the method may further comprising controlling the speed of the pump based on the output of the first and second capacitive sensors.

An example of a condensate tray assembly in accordance with the present invention will now be described with reference to the accompanying drawings, in which:
Fig. 1 is a schematic plan view of the tray assembly;
Fig. 2 is a perspective view of the tray assembly;
Fig. 2A shows the detail of the filter in circle A of Fig. 2;
Fig. 3 is a cross-sectional view through the tray, in use;
Fig. 3A shows the detail in circle A in Fig. 3;
Fig. 4 is a cross section in a horizontal plane through line IV-IV in Fig. 2;
Fig. 5 is a perspective view of a refrigeration unit;
Fig. 6 is a front view of the refrigeration unit;
Fig 6A is a cross section through line A-A in Fig. 6 showing a second tray assembly;
Fig 6B shows the detail in the circle B in Fig 6A;
Fig. 7 is a perspective view of a tray of the second tray assembly with various attachments:
Fig. 8 is a front view of an air conditioning unit:
Fig 8A is a cross section though line A-A in Fig. 8 shoeing a third tray assembly;
Fig 8B shows the detail in the circle B in Fig 8A;
Fig. 9 is a plan view of part of the tray and connections of the third tray assembly; and
Fig. 10 is a partial perspective view of the tray of third tray assembly and part of the air conditioning unit.

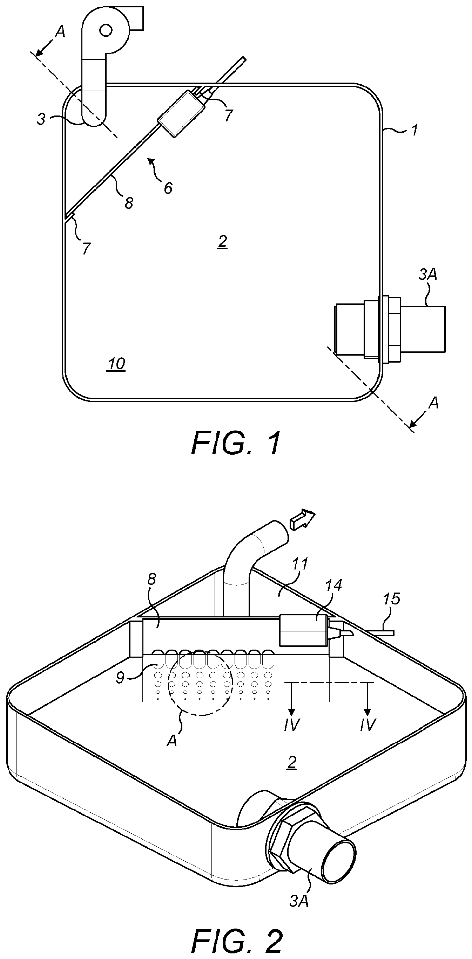

The assembly shown in Fig. 1 comprises a tray 1 having a wide shallow configuration with a floor 2 which slopes into one corner. In practice, the tray will be covered with a lid but this is not depicted in the drawings so that the internal arrangement of the tray can be seen. In this corner a discharge tube 3 is provided. In the diagonally opposite corner is an inlet 3A via which condensate enters the tray. The lowermost end 4 of the discharge tube 3 is positioned as closely as possible to the deepest part of the floor 2 while still being spaced sufficiently from the floor 2 to allow the entry of liquid through the lowermost end 4. A discharge tube 3 leads to a pump 5 as shown in Fig. 1.

This pump 5 is a self-priming pump, for example a reciprocating or rotary diaphragm pump or a peristaltic pump.

The filter assembly 6 is fitted across one corner of the tray 1 as shown in the figures. This is retained by a pair of lugs 7 which are moulded with the tray 1. The main body of the filter assembly 6 is provided by a printed circuit board 8 (PCB) which fits into the tray such that the edges of the seal form a generally fluid-tight seal with the tray. There may be some leakage around the edges of the printed circuit board, but the bulk of the fluid passes through an array of holes 9 in the PCB 8 forming the primary flow path from a main portion 10 of the tray to a discharge portion 11 on the opposite side of the tray.

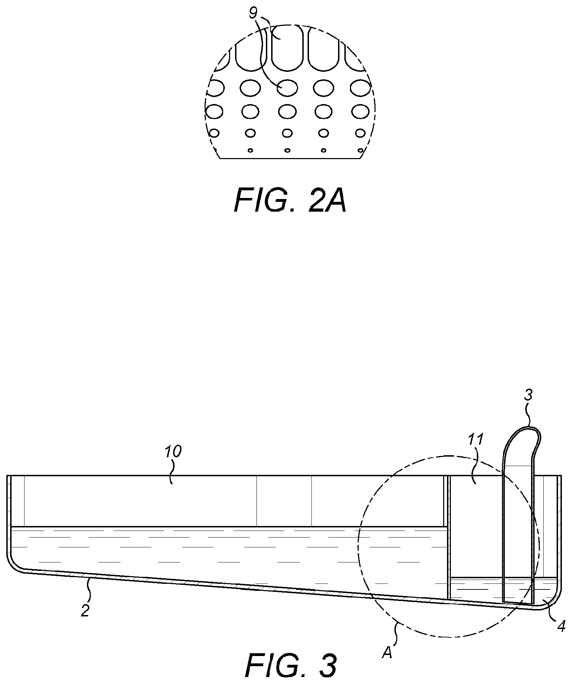

As can be seen in Fig. 2A, the size of the apertures within the PCB 8 increases with increasing depth within the tray thereby allowing the flow rate through the filter to increase at a disproportionally high rate, with increasing depth. During periods of relatively low flow, the PCB 8 can filter relatively small particles, while if the flow rate increases, large particles can be allowed to pass. The largest hole 9 is sized so that a particle which can pass through will pass through the pump.

First 12 and second 13 capacitive sensors are integrated into the printed circuit board. With reference to Fig. 2, these capacitive sensors are positioned immediately below a control electronics enclosure 14 which houses the control circuitry for the sensors. A power line 15 leads from this enclosure 14.

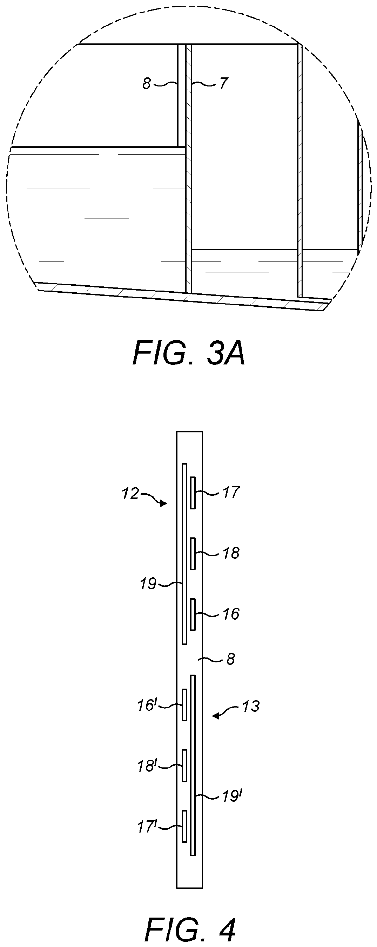

The first capacitive sensor 12. extends downwardly from the enclosure 14. As shown in Fig. 4, the first capacitive sensor 12 has a ground electrode 16 and a sensing electrode 17 which are formed within the PCB in the form of layers of a conductive material such as copper which extend vertically down away from the enclosure 14. A first shield 18 in the form of a further conductive layer is positioned between the two electrodes. A second shield 19 is formed as a layer of a conductive material positioned behind the electrodes 16, 17 and the first shield 18 as shown in Fig. 4. As a result of the shielding, the capacitance between electrodes 16, 17 will vary based on the capacitance of the medium which is to the left of the PCB 8 in Fig. 4. The shields 18, 19 will prevent or reduce the sensitivity of the electrodes to the capacitance through the PCB material or the medium present on the opposite side of the PCB. As such, the first capacitive sensor will measure the depth of the medium on the left-hand side of the PCB 8 as shown in Fig. 4.

The second capacitive electrode 13 shown in Fig. 4 is effectively the mirror image of the first capacitive sensor 12 as described above and the same components are designated with a similar reference numeral 16'-19' respectively.

The second capacitive sensor 13 is therefore sensitive to the depth of material on the righthand side of the PCB 8 as shown in Fig. 4.

With reference to Fig. 3, this shows a high liquid depth in the main portion 10 shown in Fig. 3 and a low liquid depth in a discharge portion 11. This may happen towards the end of a pumping cycle if the filter is blocked to some extent such that the liquid passing through the PCB 8 is flowing at a lower rate than the rate at which the liquid is being pumped from a discharge portion 11. In this situation, in the sensor as described in relation to Fig. 4, the main portion 10 is on the left-hand side of the PCB 8 and the discharge portion 11 is on the opposite side. For the first sensor 12 the majority of the depth the electrodes 16, 17 will be measuring the capacitance between the electrodes through the water. By contrast, the second capacitive sensor 13 will be measuring the capacitance between the electrodes 16', 17' largely through air. In between, at intermediate levels, the capacitance will vary between these two values at a continuous rate depending upon how much of each electrode is below the water.

Because these electrodes allow a rate of change of the depths to be determined, the control electronics is aware of how fast the liquid levels are changing on either side of the PCB. As such, the pump 5 can continue to operate until almost all of the liquid has been pumped out of the discharge portion 11. As can be seen in Fig. 3, the lowermost end 4 of the discharge tube 3 4 is beneath the lower edge of the PCB 8. However, by extrapolating the rate of discharge, the liquid can continue to be pumped out even when the liquid level has dropped below the level of the printed circuit board 8.

This allows a very low level of liquid to be achieved in the tray. As the pump is a self priming pump, little of no residual liquid is left there too.

Also, by being aware of the rate of change of the liquid on either side of the PCB 8, the control electronics can determine not only how quickly the discharge portion 11 is being emptied, but also how efficiently the filter is working given the difference in the rate of change of the level on either side. The speed of the pump can therefore be controlled to keep up with the rate of flow into the tray 1.

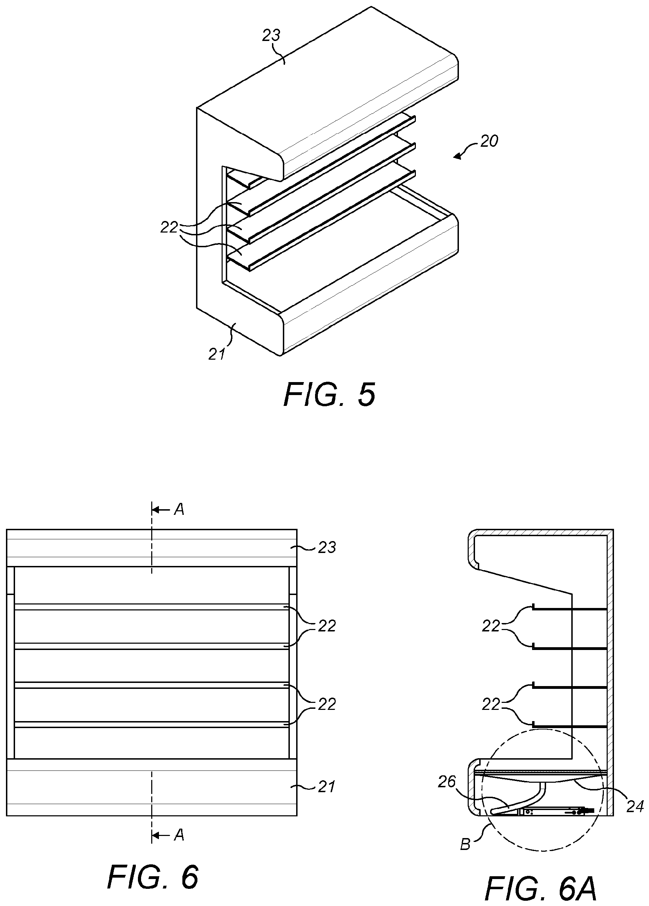

Figs. 5-7 show a refrigeration unit into which a filter assembly similar to that described above is incorporated.

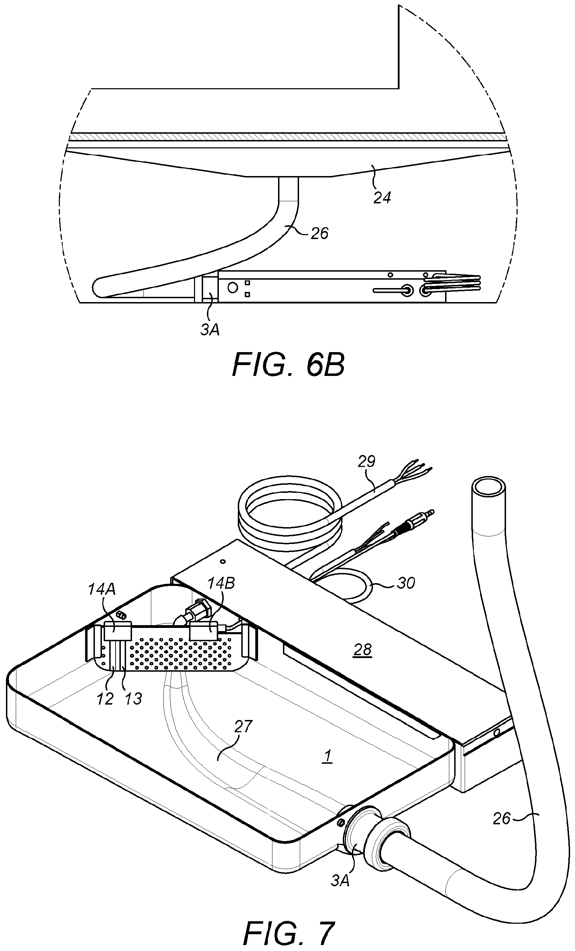

The refrigeration unit 20 shown in Figs. 5, 6 and 6A is the type of unit found in a supermarket. This comprises a base 21 having a number of shelves 22 and an upper portion 23.

Incorporated within the upper part of the base 21 is a collection plate 24 as best shown in Fig. 6B. This plate has a generally flat configuration which extends across the base 21 and has a gently sloping lower wall 25 which slopes towards a central opening for an outlet duct 26. This duct 26 leads to an inlet duct 3A on a condensate tray 1. The tray 1 is the same in most material respects as the tray described above in relation to Figs. 1-4 such that the same reference numerals have been used. Only the differences are described below.

The tray 1 has a channel 27 in its lower wall to facilitate the flow of the condensate towards the outlet. As shown in Fig. 7, the tray 1 protrudes from the plate 28 which forms part of the base 21 of the refrigeration unit 20. The tray 1 can be pushed back from the extended position shown in Fig. 7 further under the plate 28 until the inlet 3A abuts against the surrounding housing.

As shown in Fig. 7, the control electronics enclosure 14 is now in two parts 14A and 14B. 14A contains the connections necessary for the two capacitive sensors 12, 13 which are as described above. Fig. 14B contains the necessary external connections, for example to the power lead 29. Fig. 7 also depicts a second power lead 30 for the pump.

In use, condensate from the refrigeration unit 20 will flow under gravity into the collecting plate 24, along outlet duct 26 and into the tray 1 from which it will be pumped out of the inlet as described above in relation to the first example. The level sensing is as discussed above.

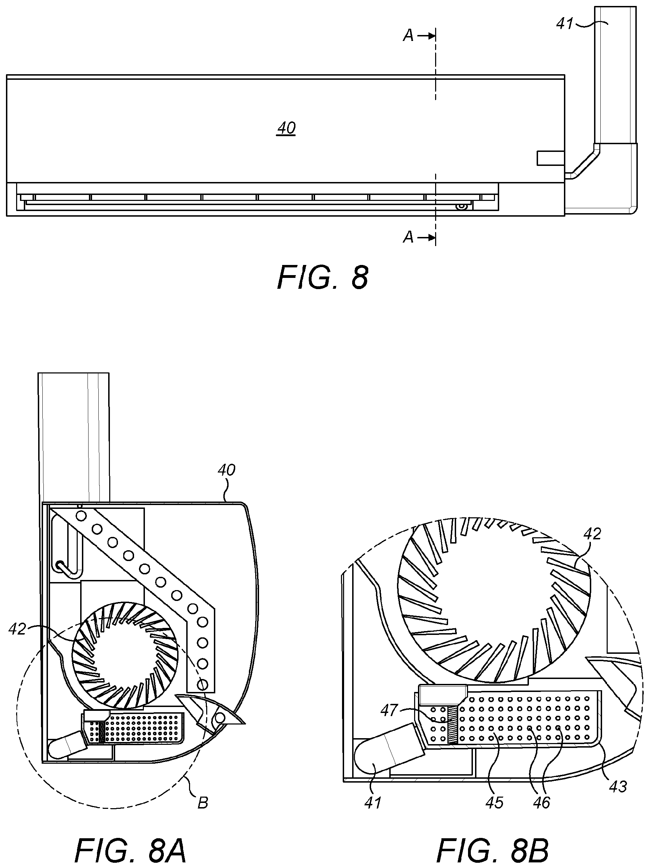

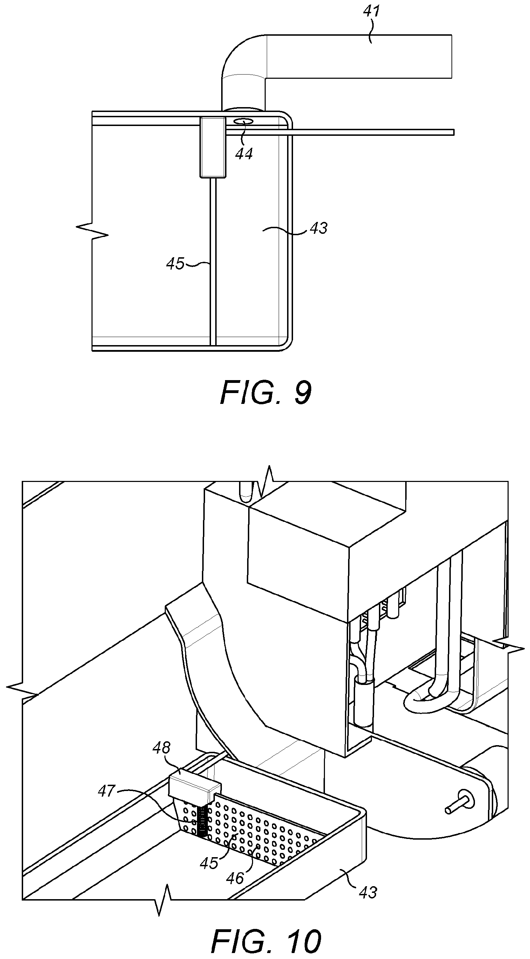

Figs. 8-10 show an example of a condensate tray assembly incorporating a filter. This time, the tray assembly is positioned beneath an air conditioning unit 40 rather than the refrigeration unit. The air conditioning unit 40 is a conventional wall-mounted unit having an outlet duct 41 via which the condensate is pumped out of the air conditioning unit. As shown in Figs. 8A and 8B, beneath the fan coil 42 is a condensate tray 43 to which the outlet duct 41 is connected via outlet orifice 44. Within the tray 43 is a filter assembly 45 which is formed in essentially the same manner as the filter assembly 6 described above. In particular, it is made from a PCB with a number of holes 46, the same capacitive sensor 47 and control electronics enclosure 48.

As before, the capacitive sensor allows the rate of change of the depth within the tray 43 to be determined so that the pump may be operated accordingly. This provides the advantages mentioned above in relation to the first two examples.

## Claims

1. A condensate tray assembly for use below a condensate generating appliance, the assembly comprising:
a tray (1) comprising an inlet via which condensate can enter the tray:
an outlet (3) towards the bottom of the tray; and
a pump (5) connected to the outlet for pumping liquid from the tray; **characterised by**
a sensor (12,13) within the tray to determine the rate of change of the depth of liquid in the tray:
and
a control system receiving an input from the sensor to control the pump to pump liquid from the tray and to turn off the pump based on the rate of reduction of the depth of liquid in the tray.

2. A condensate tray assembly according to claim 1, wherein the pump (5) is a self-priming pump.

3. A condensate tray assembly according to claim 2, wherein the sensor (12,13) is a capacitive sensor.

4. A condensate tray assembly according to any preceding claim, wherein the tray has a sloped lower surface (2) which slopes towards the outlet (3), the sensor (12.13) being positioned in the vicinity of the outlet.

5. A condensate tray assembly according to any preceding claim, wherein a filter (6) is provided in the tray upstream of the outlet (3) in order to prevent large particles within the tray (1) from entering the pump (5).

6. A condensate tray assembly according to claim 5, wherein the sensor (12.13) is integrated into the filter.

7. A condensate tray assembly according to claim 6, wherein the filter (6) is formed of a printed circuit board (8) comprising a plurality of holes (9) forming a filter screen through the printed circuit board.

8. A condensate tray assembly according to claim 7, wherein a first set of capacitive elements (16-18) are formed in the printed circuit board (8) forming a first capacitive sensor (12) capable of measuring the depth of the liquid adjacent to the filter (6).

9. A condensate tray assembly according to claim 8, wherein the capacitive elements (16-18) are shielded (19) on one side such that they measure the depth on one side of the filter.

10. A condensate tray assembly according to claim 8 or claim 9, wherein the filter comprises a second set of capacitive elements (16'-18') formed on the printed circuit board forming a second capacitive sensor (13) capable of measuring the depth of the liquid adjacent to the filter (6) on a side opposite to the side measured by the first set of capacitive elements (16-18).

11. A condensate tray assembly according to any of claims 7 to 10, wherein the printed circuit board preferably has an array of holes (9) which decrease in size towards the bottom of the printed circuit board.

12. A condensate tray assembly according to any of claims 8 to 11, wherein the printed circuit board (8) is copper-plated in the vicinity of the holes.

13. A refrigeration unit comprising a condensate tray assembly according to any preceding claim.

14. A method of emptying a condensate tray assembly for use below a condensate generating appliance, the assembly comprising:
a tray (1) comprising an inlet via which condensate can enter the tray:
an outlet (3) towards the bottom of the tray; and
a pump (5) connected to the outlet for pumping liquid from the tray;
**characterised by** the method comprising:
sensing the rate of change of the depth of liquid in the tank;
controlling the pump to pump liquid from the tray; and
turning off the pump based on the rate of reduction of the depth of liquid in the tray.

15. A method according to claim 14 of emptying a condensate tray assembly according to claim 10 further comprising controlling the speed of the pump based on the output of the first (12) and second (13) capacitive sensors.

## Patentansprüche

1. Kondensatwannenanordnung zur Verwendung unter einem Kondensaterzeugungsgerät, die Anordnung umfassend:
eine Wanne (1), die einen Einlass umfasst, über welchen Kondensat in die Wanne gelangen kann;
einen Auslass (3) in Richtung der Unterseite der Wanne; und
eine Pumpe (5), die mit dem Auslass verbunden ist, um Flüssigkeit aus der Wanne zu pumpen; **gekennzeichnet durch**
einen Sensor (12, 13) innerhalb der Wanne, um die Änderungsrate der Tiefe der Flüssigkeit in der Wanne zu bestimmen; und
ein Steuersystem, das eine Eingabe von dem Sensor empfängt, um die Pumpe zu steuern, so dass sie Flüssigkeit aus der Wanne pumpt, und um die Pumpe basierend auf der Verringerungsrate der Tiefe der Flüssigkeit in der Wanne abzuschalten.

2. Kondensatwannenanordnung nach Anspruch 1, wobei die Pumpe (5) eine selbstansaugende Pumpe ist.

3. Kondensatwannenanordnung nach Anspruch 2, wobei der Sensor (12, 13) ein kapazitiver Sensor ist.

4. Kondensatwannenanordnung nach einem der vorhergehenden Ansprüche, wobei die Wanne eine geneigte untere Oberfläche (2) aufweist, die sich in Richtung des Auslasses (3) neigt, wobei der Sensor (12, 13) in der Nähe des Auslasses positioniert ist.

5. Kondensatwannenanordnung nach einem der vorhergehenden Ansprüche, wobei ein Filter (6) in der Wanne dem Auslass (3) vorgeschaltet vorgesehen ist, um zu verhindern, dass große Partikel innerhalb der Wanne (1) in die Pumpe (5) gelangen.

6. Kondensatwannenanordnung nach Anspruch 5, wobei der Sensor (12, 13) in das Filter integriert ist.

7. Kondensatwannenanordnung nach Anspruch 6, wobei das Filter (6) aus einer gedruckten Leiterplatte (8) gebildet ist, die eine Mehrzahl von Löchern (9) aufweist, die ein Filtersieb durch die gedruckte Leiterplatte bilden.

8. Kondensatwannenanordnung nach Anspruch 7, wobei ein erster Satz von kapazitiven Elementen (16-18) in der gedruckten Leiterplatte (8) gebildet ist, der einen ersten kapazitiven Sensor (12) bildet, der fähig ist, die Tiefe der Flüssigkeit angrenzend an das Filter (6) zu messen.

9. Kondensatwannenanordnung nach Anspruch 8, wobei die kapazitiven Elemente (16-18) auf einer Seite (19) abgeschirmt sind, so dass sie die Tiefe auf einer Seite des Filters messen.

10. Kondensatwannenanordnung nach Anspruch 8 oder Anspruch 9, wobei das Filter einen zweiten Satz von kapazitiven Elementen (16'-18') umfasst, der auf der gedruckten Leiterplatte gebildet ist, die einen zweiten kapazitiven Sensor (13) bildet, der fähig ist, die Tiefe der Flüssigkeit angrenzend an das Filter (6) auf einer Seite gegenüber der Seite zu messen, die durch den ersten Satz von kapazitiven Elementen (16-18) gemessen wird.

11. Kondensatwannenanordnung nach einem der Ansprüche 7 bis 10, wobei die gedruckte Leiterplatte bevorzugt eine Anordnung von Löchern (9) aufweist, deren Größe in Richtung der Unterseite der gedruckten Leiterplatte abnimmt.

12. Kondensatwannenanordnung nach einem der Ansprüche 8 bis 11, wobei die gedruckte Leiterplatte (8) in der Nähe der Löcher verkupfert ist.

13. Kälteerzeugungseinheit, die eine Kondensatwannenanordnung nach einem der vorhergehenden Ansprüche umfasst.

14. Verfahren zum Leeren einer Kondensatwannenanordnung zur Verwendung unter einem Kondensaterzeugungsgerät, die Anordnung umfassend:
eine Wanne (1), die einen Einlass umfasst, über welchen Kondensat in die Wanne gelangen kann;
einen Auslass (3) in Richtung der Unterseite der Wanne; und
eine Pumpe (5), die mit dem Auslass verbunden ist, um Flüssigkeit aus der Wanne zu pumpen;
**dadurch gekennzeichnet, dass** das Verfahren umfasst:
Abtasten der Änderungsrate der Tiefe der Flüssigkeit in der Wanne;
Steuern der Pumpe, um Flüssigkeit aus der Wanne zu pumpen; und
Abschalten der Pumpe basierend auf der Verringerungsrate der Tiefe der Flüssigkeit in der Wanne.

15. Verfahren nach Anspruch 14 zum Leeren einer Kondensatwannenanordnung nach Anspruch 10, das ferner ein Steuern der Drehzahl der Pumpe basierend auf der Ausgabe des ersten (12) und zweiten (13) kapazitiven Sensors umfasst.

## Revendications

1. Ensemble de plateau de condensat destiné à être utilisé en dessous d'un appareil de génération de condensat, l'ensemble comprenant :
un plateau (1) comprenant une entrée via laquelle le condensat peut entrer dans le plateau :
une sortie (3) vers le bas du plateau ; et
une pompe (5) connectée à la sortie pour pomper du liquide à partir du plateau ; **caractérisée par**
un capteur (12, 13) à l'intérieur du plateau pour déterminer le taux de variation de la profondeur de liquide dans le plateau : et
un système de commande recevant une entrée en provenance du capteur pour commander la pompe afin de pomper du liquide à partir du plateau et pour arrêter la pompe sur la base du taux de réduction de la profondeur de liquide dans le plateau.

2. Ensemble de plateau de condensat selon la revendication 1, dans lequel la pompe (5) est une pompe auto-amorçante.

3. Ensemble de plateau de condensat selon la revendication 2, dans lequel le capteur (12, 13) est un capteur capacitif.

4. Ensemble de plateau de condensat selon l'une quelconque des revendications précédentes, dans lequel le plateau présente une surface inférieure inclinée (2) qui est inclinée vers la sortie (3), le capteur (12.13) étant positionné au voisinage de la sortie.

5. Ensemble de plateau de condensat selon l'une quelconque des revendications précédentes, dans lequel un filtre (6) est prévu dans le plateau en amont de la sortie (3) afin d'empêcher de grosses particules à l'intérieur du plateau (1) d'entrer dans la pompe (5).

6. Ensemble de plateau de condensat selon la revendication 5, dans lequel le capteur (12.13) est intégré dans le filtre.

7. Ensemble de plateau de condensat selon la revendication 6, dans lequel le filtre (6) est formé d'une carte de circuit imprimé (8) comprenant une pluralité de trous (9) formant un tamis de filtre à travers la carte de circuit imprimé.

8. Ensemble de plateau de condensat selon la revendication 7, dans lequel un premier ensemble d'éléments capacitifs (16-18) sont formés dans la carte de circuit imprimé (8) en formant un premier capteur capacitif (12) capable de mesurer la profondeur du liquide adjacent au filtre (6).

9. Ensemble de plateau de condensat selon la revendication 8, dans lequel les éléments capacitifs (16-18) sont blindés (19) sur un premier côté de telle sorte qu'ils mesurent la profondeur sur un premier côté du filtre.

10. Ensemble de plateau de condensat selon la revendication 8 ou la revendication 9, dans lequel le filtre comprend un second ensemble d'éléments capacitifs (16'-18') formés sur la carte de circuit imprimé formant un second capteur capacitif (13) capable de mesurer la profondeur du liquide adjacent au filtre (6) sur un côté opposé au côté mesuré par le premier ensemble d'éléments capacitifs (16-18).

11. Ensemble de plateau à condensat selon l'une quelconque des revendications 7 à 10, dans lequel la carte de circuit imprimé comporte de préférence un réseau de trous (9) dont la taille diminue vers le bas de la carte de circuit imprimé.

12. Ensemble de plateau de condensat selon l'une quelconque des revendications 8 à 11, dans lequel la carte de circuit imprimé (8) est plaquée de cuivre à proximité des trous.

13. Unité de réfrigération comprenant un ensemble de plateau de condensat selon l'une quelconque des revendications précédentes.

14. Procédé pour vider un ensemble de plateau de condensat destiné à être utilisé en dessous d'un appareil de génération de condensat, l'ensemble comprenant les étapes consistant à :
un plateau (1) comprenant une entrée via laquelle le condensat peut entrer dans le plateau :
une sortie (3) vers le bas du plateau ; et
une pompe (5) reliée à la sortie pour pomper du liquide à partir du plateau ; **caractérisé en ce que** le procédé comprend les étapes consistant à :
détecter le taux de variation de la profondeur de liquide dans le réservoir ;
commander la pompe pour pomper du liquide à partir du plateau ; et
éteindre la pompe en fonction du taux de réduction de la profondeur de liquide dans le plateau.

15. Procédé selon la revendication 14 pour vider un ensemble de plateau de condensat selon la revendication 10, comprenant en outre une commande de la vitesse de la pompe sur la base de la sortie des premier (12) et second (13) capteurs capacitifs.
